Europäisches Patentamt

(19) European Patent Office

Office européen des brevets

(11) Numéro de publication : **0 288 502 B1**

(12) **FASCICULE DE BREVET EUROPEEN**

(45) Date de publication du fascicule du brevet :
**24.07.91 Bulletin 91/30**

(21) Numéro de dépôt : **87906748.6**

(22) Date de dépôt : **13.10.87**

(86) Numéro de dépôt international :
**PCT/FR87/00396**

(87) Numéro de publication internationale :
**WO 88/02741 21.04.88 Gazette 88/09**

(51) Int. Cl.⁵ : **C04B 35/80, C04B 35/82**

(54) **MATERIAU COMPOSITE CERAMIQUE-CERAMIQUE ET PROCEDE D'OBTENTION.**

(30) Priorité : **14.10.86 FR 8614224**
**13.10.87 FR 8714096**

(43) Date de publication de la demande :
**02.11.88 Bulletin 88/44**

(45) Mention de la délivrance du brevet :
**24.07.91 Bulletin 91/30**

(84) Etats contractants désignés :
**AT BE CH DE FR GB IT LI LU NL SE**

(56) Documents cités :
**EP-A- 0 026 687**
**WO-A-82/00816**
**US-A- 4 284 664**
**Chemical Abstracts, vol. 91, No. 8, 20 août**
**1979, (Columbus, Ohio, US), J. Davidovits:**
**"Synthesis of new high-temperature geo-**
**polymers for reinforced plastics/composites",**
**voir page 2, abrégé 57588f, & Annu. Pac. Tech.**
**Conf. Tech. Disp., (Tech. Pap.) (Soc. Plast.**
**Eng.) 1979, 4,151-4**

(73) Titulaire : **DAVIDOVITS, Nicolas**
**6, rue Brison**
**F-42300 Roanne (FR)**
Titulaire : **DAVIDOVICS, Michel**
**5, route de Villers**
**F-60700 Pont-Ste-Maxence (FR)**
Titulaire : **Davidovits, Joseph**
**16, rue Galilée**
**F-02100 Saint-Quentin (FR)**

(72) Inventeur : **DAVIDOVITS, Nicolas**
**6, rue Brison**
**F-42300 Roanne (FR)**
Inventeur : **DAVIDOVICS, Michel**
**5, route de Villers**
**F-60700 Pont-Ste-Maxence (FR)**
Inventeur : **Davidovits, Joseph**
**16, rue Galilée**
**F-02100 Saint-Quentin (FR)**

## Description

L'invention a pour objet la description et la fabrication de matériaux composites à base de renfort fibreux céramique, résistant à la température, dont la matrice céramique est un composé géopolymérique silico-aluminate qui est le résultat d'une réaction de polycondensation minérale de mélanges réactionnels à base de silico-aluminates alcalins et/ou alcalino-terreux.

L'objet principal de cette invention est la description de différents matériaux composites céramique-céramique, dont la matrice céramique est constituée par un composé géopolymérique silico-aluminate alcalin et/ou alcalino-terreux. Le second objet de cette invention est la description des procédés d'obtention de ces matériaux composites céramique-céramique. La polycondensation de la matrice céramique est du type hydrothermale. Elle s'effectue à une température comprise entre 20°C et 120°C et est voisine de celle qui permet l'obtention de minéraux comme les zéolithes ou feldspathoides synthétiques, ou les géopolymères de type poly(sialate) ou poly(sialate siloxo).

Dans le cadre de l'invention, l'appellation matériau composite désigne un matériau composé de 2 ou plusieurs constituants en contact intime à l'échelle microscopique. Dans le cas des composites à matrice organique, qui sont les plus connus, les constituants sont :

1) un renfort fibreux orienté ou aléatoire qui donne ses propriétés de résistance et de régidité mécanique au composite final.

2) une matière plastique thermodurcissable ou thermosplastique qui permet de figer la pièce dans la forme finale tout en assurant la transmission des efforts aux fibres.

Dans le cadre de l'invention, le renfort fibreux est constitué de fibres céramiques. La matière plastique du point 2) est un géopolymère thermodurcissable et la matrice ainsi obtenue est du type céramique.

La notion de composite céramique-céramique est définie dans l'ouvrage de R. Naslain, Introduction aux Matériaux Composites, Editions du CNRS, Paris, 1985. Dans le chapitre XVIII de cet ouvrage on apprend les différentes technologies utilisées par l'homme de l'art pour réaliser l'imprégnation à coeur du matériau fibreux par la matrice céramique. On connait trois méthodes d'élaboration : la voie gazeuse, liquide ou solide. Ces méthodes d'imprègnation ont toutes en commun de nécessiter des températures extrèmement élevées accompagnées de techniques permettant d'éviter la destruction, à ces températures, des renforts fibreux. L'imprègnation par voie liquide d'une matrice vitro-céramique silico-alumineuse comporte en général quatre étapes : 1) la préparation d'un préimprègné à l'aide d'une barbotine, 2) réalisation d'une préforme composite, 3) compression entre 6-10 MPa à haute température 1200-1500°C et sous atmosphère controlée, 4) céramisation par recuit à 900-1000°C. Il y a une analogie entre cette technique et les procédés de mise en ouvre des matériaux composites à matrice organique, avec cependant une différence essentielle se situant au niveau de la valeur de la température de mise en oeuvre, 100°-250°C pour les organiques contre 1000-1500°C pour les céramiques.

Tout au contraire, les composites céramique-céramique selon l'invention sont caractérisés par la facilité de mise en oeuvre à basse température, les résistances à la température et les résistances mécaniques. Ces trois qualités étaient jusqu'alors inconciliables. La facilité de mise en oeuvre se trouvait dans les matières plastiques organiques ; la résistance à la température était la caractéristique des céramiques ; la résistance mécanique s'obtenait avec les composites. Les matériaux composites selon l'invention concilient ces trois propriétés. Ils se transforment à basse température, entre 20°C et 120°C avec les mêmes technologies que les plastiques organiques, restent stables jusque 1200°C-1400°C et la présence de fibres céramiques à haute performance leur confèrent des propriétés mécaniques élevées, dans une très large plage de température.

Un autre objet de l'invention est la description des procédés de fabrication de quelques articles réalisés à l'aide du matériau composite céramique-céramique selon l'invention, comme en particulier la confection de petit outillage et de matériel utilisé pour la coulée des métaux non ferreux.

La matrice céramique correspond à la classe des matériaux géopolymères. Les Brevets français FR 2.464.227, FR 2.489.290, FR 2.489.291 et leurs équivalents européens EP 26.687 et EP 66.571, déposés par l'un des demandeurs, décrivent ces polymères minéraux ou composés polymériques de la classe des géopolymères de type poly(sialate) $M_n$ (—Si-O-Al-O—)$_n$ et/ou poly(sialatesiloxo) $M_n$(—Si-O-Al-O-Si-O—)$_n$ dans lequel M représente au moins un cation alcalin et n le degré de polymérisation, dont la structure s'apparente à celle des zéolithes et feldspathoides. Les procédés de préparation de ces géopolymères silico-aluminates font intervenir une polycondensation hydrothermale, laquelle permet l'obtention de liants ou ciments minéraux pouvant agglomérer de nombreuses charges, pour obtenir des objets moulés, des bétons, etc.

Les demandes de brevet européen EP 100.848, EP 111.862, EP 153.097, ainsi que les demandes de brevet allemand DE 3229339, DE 3246621, DE 3303409, décrivent également l'utilisation de cette polycondensation hydrothermale en tant que liant ou résine minérale. Eni général, dans ces brevets cités, on prépare un mélange réactionnel aqueux de silico-aluminates alcalins et alcalino-terreux. On utilise ce mélange réactionnel

2

comme liant ou ciment pour agglomérer des charges lourdes, des sables et des aggrégats. Les produits obtenus dans les brevets ci-dessus sont des bétons ou des éléments fortement chargés en aggrégats lourds et de grande granulométrie. Ils peuvent contenir des produits de renforcement, comme ceux utilisés couramment dans les produits à base de ciment. Ces produits renforcés ne correspondent pas à l'appellation matériau composite telle que décrite plus haut, la quantité de fibre étant en général inférieure à 10% en poids par rapport à la masse du matériau.

Au contraire, dans le cadre de l'invention, la quantité de fibre est au moins égal à 30 % en poids par rapport à la masse du matériau composite. De préférence elle sera supérieure, et sera de l'ordre de 45% à 60% en poids, pour 40% à 55% en poids de matrice céramique géopolymère.

Les géopolymères obtenus dans le cadre des procédés décrits dans les brevets ci-dessus, ont des structures apparentées à celles de minéraux comme l'analcite, la phillipsite, la kaliophilite, ou l'hydrosodalite, silico-aluminates tridimensionnels contenant de l'eau dite zéolithique, fixée à l'intérieur et à l'extérieur de la charpente silico-aluminate. Dans d'autres cas, selon les produits et charges employés, les structures sont amorphes aux rayons X, mais les produits conservent un caractère zéolithique plus ou moins marqué. La quantité d'eau zéolithique est comprise entre 10% et 30% en poids du composé géopolymère obtenu, sans les charges éventuelles. Cette eau zéolithique s'évapore lors des séchages, et provoque un retrait assez conséquent. Il se forme d'importantes fissures et le craquellement du matériau obtenu. Pour éviter ce défaut majeur, il est absolument nécessaire d'ajouter des charges de dimension supérieures à 50 microns, comme des sables, du quartz, du corindon, du sable de zircon, de la mullite, des chamottes.

Les mélanges préparés selon les brevets cités plus haut ont donc toujours une viscosité très élevée, ce qui limite leur utilisation en tant que résine d'imprègnation pour fabriquer des matériaux composites à base de fibre. En effet lorsque l'on imprègne un textile ou un mat de fibre avec de tels mélanges, les charges ne peuvent pas pénétrer à l'intérieur du réseau fibreux, car elles sont trop grosses. Elles se trouvent donc situées à l'extérieur des fibres. De ce fait, le liant imprègné entre les fibres ne contient pas de charge, et le géopolymère polycondensé entre les fibres est entièrement fissuré, ce qui nuit à la cohésion du matériau.

On admet, en général, que la dimension des charges pour imprégner un réseau fibreux doit être inférieure au diamètre de la fibre unitaire. Cette dimension est de l'ordre de 5 microns. Il existe très peu de matériau pouvant jouer le rôle de charge ultra-fine, pour imprégnation, selon l'invention. Nous citerons les fumées de silice, les fumées d'alumine qui ont des dimensions inférieures à 1 micron, allant jusqu'à 0.1 micron, certains alumino-silicates comme le mica micronisé.

Ces éléments ultra-fins, de part leur dimension, font partie intégrante de la matrice géopolymérique. Ils agissent non pas en tant que simple charge inerte mais, étant de la même famille chimique que les géopolymères, ils réagissent en surface avec le milieu réactionnel, faisant ainsi partie du mélange réactionel alumino-silicate alcalin. Ces éléments sont ainsi pris en compte dans les ratios qui déterminent les rapports molaires des réactifs silico-aluminates alcalins constituant la matrice géopolymérique du matériau composite. Les rapports molaires des principaux ingrédients définissant le mélange alumino-silicate alcalin sont compris ou égaux aux valeurs suivantes :

$$M_2O/SiO_2 \quad 0.10 \text{ à } 0.95$$

$$SiO_2/Al_2O_3 \quad 2.50 \text{ à } 6.00$$

$$M_2O/Al_2O_3 \quad 0.25 \text{ à } 5.70$$

$M_2O$ représentant soit $Na_2O$ et/ou $K_2O$, soit le mélange d'au moins un oxyde alcalin avec $CaO$ provenant des mélanges réactionnels contenant des alumino-silicates de calcium, comme ceux décrits dans la demande de brevet EP 153.097.

Les exemples qui suivent illustrent les procédés de préparation et certaines propriétés non limitatives de ces matériaux composites dont la matrice céramique est constituée par des composés géopolymériques contenant :

a) un géopolymère poly(sialate) $M_n(\text{—Si-O-Al-O—})_n$ et,/ou poly(sialate-siloxo) $M_n(\text{—Si-O-Al-O-Si-O—})_n$, M représentant ou moins un cation alcalin et n le degré de polycondensation,

b) des éléments ultra-fins siliceux et/ou alumineux et/ou silico-alumineux, de dimension inférieure à 5 microns, de préférence inférieure à 2 microns,

3

Exemple 1) :

On prépare 860 grammes d'un mélange réactionnel contenant :

$H_2O$ : 17.33 moles ; $K_2O$ : 1.630 moles ; $SiO_2$ : 4.46 moles ; $Al_2O_3$ : 1.081 moles.

$Al_2O_3$ provient d'un oxyde alumino-silicate dans lequel le cation Al est tétracoordonné, $SiO_2$ provient de cet oxyde alumino-silicate, et d'une solution de silicate de potassium ; $K_2O$ provient du silicate de potassium et de KOH anhydre. Le rapport molaire des oxydes réactionnel est égal à :

$$K_2O/SiO_2 \qquad 0.36$$

$$SiO_2/Al_2O_3 \qquad 4.12$$

$$H_2O/Al_2O_3 \qquad 16.03$$

$$K_2O/Al_2O_3 \qquad 1.51$$

Avec ce mélange dont le pH est 14, on imprègne un tissus de fibre de carbone stable en milieu alcalin et l'ensemble est recouvert d'un film plastique pour éviter l'évaporation, puis placé dans une étuve à 85°C pendant 1 h 30 mn. On démoule, et après sèche à 85°C on obtient une plaque dont la matrice est entièrement fissurée, se craquellant sans avoir de tenue.

Selon le brevet français 80.18971, pour éviter ces fissures, il faut ajouter 5 à 95 parties en poids de charges, en général 50 parties en poids, de granulométrie supérieure à 50 microns. Selon les exemples donnés dans ce brevet, on ajoute au mélange réactionnel 20 parties en poids de charges silico-alumineuses, de type chamotte, de granulométrie inférieure à 200 microns. On imprègne et racle un tissus de fibre de carbone, puis on confectionne une plaque multicouche comprenant plusieurs couches de ce tissus imprégné. On recouvre d'un film plastique, place l'ensemble sous un poids de manière à assurer une cohésion, et on polycondense dans une étuve à 85°C pendant 1h 30 mm. On démoule, et après sèche à 85°C, on obtient une plaque don la résistance à la flexion est de 65 Mpa. L'imprègnation ne s'est pas faite à coeur, et le matériau composite se délamine très facilement. Il n'y a aucune cohésion à l'intérieur des fibres.

Exemple 2) :

A partir des exemples et des revendications de la Demande de Brevet Français n° 86.14224, on procède de la façon suivante. Dans le mélange réactionnel de l'exemple 1) on ajoute 0.80 moles de sulfite de sodium $Na_2SO_3$, et 0.50 moles de $SiO_2$ provenant de fumée de silice de dimension inférieure à 1 micron. Le rapport molaire des oxydes réactionnels est égal à :

$$(Na_2O,K_2O)/SiO_2 \qquad 0.48$$

$$SiO_2/Al_2O_3 \qquad 4.60$$

$$H_2O/Al_2O_3 \qquad 16.03$$

$$(Na_2O,K_2O)/Al_2O_3 \qquad 2.25$$

$$SO_2/Al_2O_3 \qquad 0.74$$

$$SO_2/SiO_2 \qquad 0.16$$

L'addition de sulfite de sodium, ou plus généralement de sulfures alcalins et alcalino-terreux et de sulfites alcalins et alcalino-terreux, a pour avantage de protéger la fibre de verre contre la corrosion due à la forte alcalinité du mélange réactionnel. Le mélange très fluide sert à imprègner un tissus de fibre de verre E, type silione, un taftas de fibre de carbone, et un taftas de fibre de SiC. Après durcissement et mise en forme sous une plaque métallique à 70°C pendant 15 minutes, les plaquettes sont sèchées à 120°C. La résistance à la flexion est pour le verre E de 140 Mpa (Fa = 8), le carbone de 175 Mpa (Fa = 10.5), le SiC de 210 Mpa (Fa = 12). Les traitements thermiques font baisser la valeur du Fa pour le verre E, vers 400°C-450°C, alors qu'il reste pratiquement inchangé jusque 800°C pour le SiC. La fibre de carbure de silicium, comme par exemple la fibre connue sous la marque Nicalon, est la fibre céramique préférée, dans le cadre de l'invention. Les autres fibres céramiques sont également utilisables bien que fournissant des résistances à la flexion légèrement inférieures. Le choix de la fibre céramique sera en fait fonction de l'environnement thermique ou chimique entourant le matériau composite selon l'invention, lors de son utilisation industrielle.

Exemple 3) :

Le mélange de l'exemple 2), est mis en contact avec une feuille d'aluminium. On constate qu'il n'y a pas de dégagement de bulles d'hydrogène, et que l'aluminium n'est pas attaqué, alors que le simple contact de cet aluminium avec le mélange réactionnel de l'exemple 1) provoque immédiatement, l'apparition de forte quantité de gaz, et l'attaque de l'aluminium. S'il n'y a pas d'attaque, il y a cependant un collage entre la matrice sulfo-silico-aluminate et l'aluminium. Cette propriété extrèmement particulière permet de réaliser des matériaux composites multicouches associant les renforts fibreux et les matériaux en plaque ou en feuille en aluminium, comme le nid d'abeille. Dans ce cas, la résine d'imprègnation sert également d'agent de liaison entre les couches de fibres imprègnées et la ou les couches d'aluminium.

Dans les Exemples 1), 2) et 3), au lieu de silicate alcalin, on peut employer des silices colloidales ou des fumées de silice capables de fournir, dans le milieu réactionnel fortement alcalin, les silicates alcalins correspondants. Ainsi, les brevets Japonnais JP 74134599 (cf : Chemical Abstracts 082 :142233, 1975) et JP 75150699 (cf : Chemical Abstracts 084-137974, 1976), expliquent comment fabriquer facilement du "verre soluble" (polysilicate alcalin) en faisant réagir de la fumée de silice résiduelle du procédé de fabrication des métaux ferrosilicones, avec les solutions concentrées d'alcalis (NaOH, KOH).

De même au lieu de l'oxyde alumino-silicate à cation Al en position tétracoordonné, tel que décrit dans les brevets Davidovits, on pourra utiliser des oxydes d'alumine contenant à la fois des oxydes d'aluminium cristallins de type corindon, dont le cation Al est hexacoordonné, avec des oxydes d'aluminium amorphes dont le cation Al est tétracoordonné, ou des mélanges de silice amorphe et d'alumine amorphe avec cation Al tétracoordonné, sans sortir pour cela du cadre de l'invention. Ces silices et alumines se trouvent en général dans les fumées dégagées lors de la fabrication par électrofusion de différents alliages et réfractaires. Les silicates alcalins et les alumino-silicates alcalins fabriqués peuvent contenir des fines particules de silice ou de corindon non dissoutes, qui jouent le rôle d'éléments ultra-fins de dimension inférieure à 1 micron et qui améliorent encore les résistances mécaniques des matériaux composites selon l'invention.

De même, certains procédés industriels de fabrication de l'oxyde alumino-silicate à cation Al tétracoordonné, génèrent également des oxydes silico-alumineux à cation Al hexacoordonné, dont la séparation est difficile, et dont les oxydes $SiO_2$ et $Al_2O_2$ sont pris en compte dans le calcul des ratios.

La séparation entre éléments dissouts et particules non dissoutes est difficilement rentable industriellement. C'est pourquoi les quantités de ces charges ultra-fines exprimées en $SiO_2$ et/ou $Al_2O_3$, sont prises en compte dans le calcul des ratios.

Les matériaux composites fibreux à matrice céramique selon l'invention comprennent une matrice constituée par un composé géopolymérique contenant :

a) un géopolymère poly(sialate) $M_n(\text{—Si-O-Al-O—})_n$ et/ou poly(sialate-siloxo) $M_n(\text{—Si-O-Al-O-Si-O—})_n$, M représentant au moins un cation alcalin et n le degré de polycondensation,

b) d'éléments ultrafins siliceux et/ou alumineux et/ou silico-alumineux, de dimension inférieure à 5 microns, de préférence inférieure à 2 microns, le dit composé géopolymérique étant obtenu par polycondensation à une température comprise entre 20°C et 120°C d'un mélange réactionnel alumino-silicate alcalin, la composition des principaux ingrédients du dit composé géopolymérique exprimée en terme des rapports molaires des oxydes est comprise ou égale aux valeurs suivantes

$$
\begin{array}{lll}
M_2O/SiO_2 & 0.10 & \text{à } 0.95 \\
SiO_2/Al_2O_3 & 2.50 & \text{à } 6.00 \\
M_2O/Al_2O_3 & 0.25 & \text{à } 5.70
\end{array}
$$

$M_2O$ représentant soit $Na_2O$ et/ou $K_2O$, soit le mélange d'au moins un oxyde alcalin avec CaO,

Le mélange réactionnel peut également contenir d'autres ingrédients ayant un rôle spécial, comme par exemple des produits auxiliaires d'imprègnation, des pigments, ou des produits assurant la protection des fibres contre l'attaque chimique due à la forte alcalinité, comme par exemples les sulfures alcalins et les sulfites alcalins.

Les matériaux composites peuvent être multicouches avec alternance ou non de couches constituées par un matériau à base de fibre de verre ou d'aluminium, les autres couches pouvant être constituées de fibres céramiques traditionnellement stables en milieu alcalin, comme la fibre de carbone, la fibre de kaolin, la fibre d'alumine, la fibre de SiC.

Exemple 4)

On prépare une résine géopolymère d'imprégnation, à l'aide du géopolymère GEOPOLYMITE 50 (marque déposée) fabriquée par la société GEOPOLYMERE S.A.R.L., en France. La GEOPOLYMITE 50 est une résine prête à l'emploi à 2 constituants (A) et (B) qui doivent être mélangés en partie égal en poids. La partie (A) est un liquide durcisseur, la partie (B), une poudre fine de granulométrie inférieure à 5 microns. L'analyse chimique des constituants est donnée par le Tableau 1 :

TABLEAU 1

Analyse chimique de GEOPOLYMITE 50 (en poids).

| | partie (A) | partie (B) | (A+B) |
|---|---|---|---|
| $SiO_2$ | 20.95 | 30.22 | 25.60 |
| $Al_2O_3$ | - | 28.30 | 14.15 |
| $K_2O$ | 25.98 | 0.63 | 13.30 |
| $CaO$ | - | 28.00 | 14.00 |
| $MgO$ | - | 2.76 | 1.38 |
| $F^-$ | - | 9.94 | 4.87 |
| $H_2O$ | 53.03 | - | 26.51 |
| TOTAL | 99.96 | 99.85 | 99.51 |

Le rapport molaire des oxydes des principaux ingrédients de la GEOPOLYMITE 50 sont :

$$M_2O/SiO_2 \quad 0.91$$
$$SiO_2/Al_2O_3 \quad 3.10$$
$$M_2O/Al_2O_3 \quad 2.82$$

Avec cette résine GEOPOLYMITE 50 on imprègne un tissus tafta de 200 g dont la fibre est du SiC de marque NICALON. Le renfort fibreux en SiC représente 40% ; en poids du matériau imprègné. Le composite humide ainsi obtenu est sèché à 70°C pendant 10 à 15 minutes, jusqu'à l'obtention d'une perte de poids en eau de 10%. Il est ensuite placé dans un réfrigérateur à −17°C. Le préimprègné Fibre SiC/GEOPOLYMITE 50 se conserve au froid ; on peut le laisser quelques semaines dans ces conditions. Ultérieurement, la polycondensation et le thermodurcissement pourront être activés thermiquement.

EXEMPLE 5) :

Le matériau composite préimprègné de l'exemple 4) est découpé en 8 rectangles de 20 cm × 10 cm. Ces rectangles sont posés l'un sur l'autre et placés dans une presse chauffante à 110°C pendant 7 minutes. On obtient une plaque dure que l'on met dans un sachet en plastique, le tout étant laissé dans une étuve à 70°C pendant 2 heures. La plaque est ensuite enlevée de l'étuve et du sac plastique. Elle est sèchée à 70°C.

La plaque composite a une résistance à la flexion égale à 190 MPa. Cette valeur se conserve jusqu'à une température de 1000°C environ.

Les matériaux composites céramique-céramique selon l'invention sont extrèmement intéressants du point de vue des applications industrielles. Selon la technique de façonnage employée, les objets qui seront manu-

EP 0 288 502 B1

facturés auront des caractéristiques bien particulières. On pourra employer soit les préimprègnés, soit l'imprègnation par enroulement filamentaire, ou toute autre technique de façonnage couramment en usage par le spécialiste des matériaux composites à matrice organique. On citera par exemple le façonnage sous presse, en autoclave, sous vide.

Tout homme de l'art comprendra aisément l'intérêt des matériaux composites céramique-céramique selon l'invention, plus particulièrement lorsqu'il comparera les matériaux selon l'invention avec les matériaux obtenus à l'aide des techniques céramiques traditionelles. Comme le montre le Tableau 2, le procédé selon l'invention permet d'obtenir à une température de 70°C, des matériaux composites céramique-céramique ayant les mêmes caractéristiques que ceux réalisés à des températures de l'ordre de 1400°C. Il est évident, que ces hautes températures limitent grandement les applications technologiques de ces matériaux, alors que la très basse température de fabrication des composites selon l'invention permet la réalisation, en grande série, et facilement, de toute forme et objet les valeurs du tableau 2, pour les matrices céramiques, sont reproduites de "Ceramic Source '87" publié par American Ceramic Society, USA (1986).

TABLEAU 2

Comparaison entre composite Fibre SiC/Matrice Ceramique
et Composite Fibre SiC/Matrice K-PSS GEOPOLYMITE

| Composite (Fibre/Matrice) | Fabrication Temp. °C | Flexion MPa Unidirectionel |
|---|---|---|
| SiC/SiC$_2$ | 1.400 | 135 |
| SiC/Li. Alum. Silicate | 1.400 | 860 |
| SiC/cordierite | 1.400 | 170 |
| SiC/ZrO$_2$ | 1.400 | ·180 |
| SiC/mullite | 1.400 | 80 |
| SiC/VYCOR | 1.500 | 440 |
| SiC/VPS+50% BN | 1.500 | 320 |
| SiC/K-PSS GEOPOLYMITE | 70 | 380 |

les objets réalisés avec les matériaux composites selon l'invention sont par nature non inflammables et résistants à la chaleur. Ils pourront donc servir de barrière thermique ou de coupe feu. Leur facilité de mise en forme permet la réalisation de toute sorte d'objet, en plaque, en creux, en bosse, de tuyau. Ces objets seront utiles dans les industries de transformation nécessitant des matériaux ayant un bon conportement mécanique à chaud. Ce sera le cas par exemple des industries de transformation des matières plastique où les matériaux composites céramique-céramique selon l'invention permettent la confection de moule, de forme ou d'outil. Ils pourront également être très utiles dans la manipulation de métaux liquides, en fonderie.

Dans ces industries de la fonderie, il existe un besoin constant en objets utilisés comme petit outillage ou petit matériel qui servent à la coulée des métaux. Nous citerons par exemple, à titre purement indicatif et non limitatif, quelques objets qui peuvent être réalisés à l'aide des matériaux composites céramique-céramique selon l'invention : louche de coulée, godet de coulée, garnissage pour jaquette réfractaire, anneau de coulée, goulotte de coulée, canne de plongée, canne de protection de thermocouple, système d'attaque et de remplissage de moule, busette. Les objets utilisés jusque maintenant étaient fabriqués soit avec de la fonte ou de l'acier, de la céramique ou des ciments réfractaires silico-alumineux traditionnel. Ces objets sont massifs, lourds et très fragiles dans le cas de la céramique et des ciments réfractaires. Dans le cas de la coulée de l'aluminium, et des alliages, ces objets doivent être protégés par une couche, appelée poteyage, destinée à éviter le collage de l'alluminium sur les parois de l'objet. En outre ce poteyage a un rôle de protection chimique contre la corrosion par les bains de métaux non-ferreux fondus. Ce poteyage doit être renouvellé très fréquemment, ce qui entraine de fréquents arrêts et réduit considérablement la productivité.

Au contraire, il a été découvert que les matériaux composites céramique-céramique selon l'invention ne

7

se mouillaient absolument pas par l'aluminium fondu. De plus ils ne sont pas attaqués par les alcalis, les chlorures et autres produits d'affinage de l'aluminium. Par conséquent, ils peuvent être utilisés sans aucun poteillage.

En général on définit la mouillabilité d'une surface par un liquide, par l'angle de contact δ entre une goutte de ce liquide et la surface solide. Lorsque cet angle de contact est inférieur à 90 degrés, il y a mouillage. C'est le cas du contact entre une goutte d'aluminium liquide et des matériaux comme la fonte et les réfractaires silico-alumineux. Au contraire lorsque l'angle δ est supérieur à 90 degrés, le liquide mouille mal. C'est le cas pour l'aluminium liquide et la céramique à base de silice vitreuse. Lorsque l'angle δ est supérieur à 130 degrés, le liquide ne mouille absolument pas C'est le cas entre l'aluminium liquide et le graphite. Dans le cadre des matériaux composites selon l'invention, l'angle δ est supérieur à 130 degrés, et par conséquent le métal fondu ne mouille absolument pas sa surface.

Le renfort fibreux permet l'obtention d'objet très résistants et très légers. Ce renfort peut être en différentes fibres céramiques. En particulier il pourra être à base de SiC (fibre Nicalon par exemple), d'$Al_2O_3$ (fibre Nextel par exemple), de silice vitreuse. Il pourra également être constitué de mélange combinant les différentes fibres céramiques entre elles, verre, carbone, SiC, $Al_2O_3$, silice. On peut également incorporer des fils métalliques comme par exemple l'Inconel.

les exemples ont été donnés dans un but d'expliquer les propriétés et les modes d'obtention des matériaux composites céramique-céramique selon l'invention. Bien entendu ils n'ont pas de caractère limitatif.

## Revendications

1. Matériau composite céramique-céramique à base de renfort fibreux céramique et matrice céramique, caractérisé en ce que la dite matrice céramique est constituée par un composé géopolymèrique contenant :

a) un géopolymère poly(sialate) $M_n(\text{—Si-O-Al-O—})_n$ et/ou poly(sialate-siloxo) $M_n(\text{—Si-O-Al-O-Si-O—})_n$, M représentant au moins un cation alcalin et n le degré de polymérisation ;

b) des éléments ultrafins siliceux et/ou alumineux et/ou silico-alumineux, de dimension inférieure à 5 microns, de préférence inférieure à 2 microns, le dit composé géopolymérique étant obtenu par polycondensation à une température comprise entre 20°C et 120°C d'un mélange aqueux réactionnel aluminosilicate alcalin, la composition des principaux ingrédients du dit composé géopolymérique exprimée en terme des rapports molaires des oxydes est comprise ou égale aux valeurs suivantes

$$M_2O/SiO_2 \qquad 0.10 \quad \text{à} \quad 0.95$$

$$SiO_2/Al_2O_3 \qquad 2.50 \quad \text{à} \quad 6.00$$

$$M_2O/Al_2O_3 \qquad 0.25 \quad \text{à} \quad 5.70$$

$M_2O$ représentant soit $Na_2O$ et/ou $K_2O$, soit le mélange d'au moins un oxyde alcalin avec CaO.

2. Matériau composite selon la revendication 1), appelé aussi matériau composite préimprègné à matrice céramique, caractérisé en ce que la dite polycondensation est stoppée par le stockage au froid.

3. Matériau composite céramique-céramique selon les revendications 1) ou 2), caractérisé en ce que le dit renfort fibreux constitue au moins 30% en poids, de préférence au moins 45% en poids, du dit matériau composite.

4. Matériau composite céramique-céramique selon l'une quelconque des revendications 1), 2) et 3), caractérisé en ce que le dit renfort fibreux est constitué de fibres de Carbure de Silicium SiC.

5. Matériau composite céramique-céramique selon l'une quelconque des revendications 1), 3) et 4), caractérisé en ce que l'angle définissant la mouillabilité par un métal fondu, ou angle de contact δ entre une gutte de métal liquide et la surface dudit matériau céramique-céramique est supérieur à 130 degrés.

6. Procédé de fabrication d'un matériau composite céramique-céramique selon l'une quelconque des revendications 1) à 5), caractérisé en ce qu'il consiste à imprègner un renfort constitué de fibres céramiques avec un mélange aqueux silico-aluminate alcalin dont les rapports molaires des principaux ingrédients exprimés en terme d'oxyde sont compris ou égaux aux valeurs suivantes

EP 0 288 502 B1

$$M_2O/SiO_2 \quad\quad 0.10 \quad \text{à} \quad 0.95$$

$$SiO_2/Al_2O_3 \quad\quad 2.50 \quad \text{à} \quad 6.00$$

$$M_2O/Al_2O_3 \quad\quad 0.25 \quad \text{à} \quad 5.70$$

$M_2O$ représentant soit $Na_2O$ et/ou $K_2O$, soit le mélange d'au moins un oxyde alcalin avec CaO, et à laisser durcir par polycondensation à une température comprise entre 20°C et 120°C.

7. Procédé selon la revendication 6) caractérisé en ce que dans le dit mélange réactionnel on ajoute des produits auxiliaires favorisant l'imprègnation ou assurant la protection des fibres contre l'attaque chimique due à la forte alcalinité, comme par exemples des sulfures alcalins et alcalino-terreux ou des sulfites alcalins ou alcalino-terreux.

## Claims

1. Composite ceramic-ceramic material having a fibrous reinforcing ceramic and a ceramic matrix made of a geopolymeric compound comprising :
   a) a poly(sialate) geopolymer $M_n(\text{—Si-O-Al-O—})_n$ and/or poly(sialate-siloxo) $M_n(\text{—Si-O-Al-O-Si-O—})_n$, M representing at least one alkaline cation, and n the degree of polymerisation ;
   b) ultrafine silicious and/or aluminous and/or silico-aluminous constituents, of size smaller than 5 microns, preferably lower than 2 microns, the said geopolymeric compound being obtained by polycondensation at a temperature between 20°c and 120°C of an aqueous alkaline alumino-silicate reaction mixture, the composition of the principal constituents of the said geopolymeric compound expressed in terms of mole ratio of the oxides being between or equal to following values :

$$M_2O/SiO_2 \quad 0.10 \text{ to } 0.95$$

$$SiO_2/Al_2O_3 \quad 2.50 \text{ to } 6.00$$

$$M_2O/Al_2O_3 \quad 0.25 \text{ to } 5.70$$

$M_2O$ representing either $Na_2O$ and/or $K_2O$, or a mixture of at least one alkaline oxide with CaO.

2. Composite material according to claim 1), also named pre-impregnated composite with a ceramic matrix, wherein said polycondensation is stopped by cold storage.

3. Composite ceramic-ceramic material according to either claim 1 or claim 2, wherein said fibrous reinforcing is equal to at least 30% by weight, preferably at least 45% by weight, compared with the mass of composite material.

4. Composite ceramic-ceramic material according to either claim 1 or claim 2 or claim 3, wherein said fibrous reinforcing is made of Silicon Carbide SiC fibres.

5 Composite ceramic-ceramic material according to either claim 1 or claim 2 or claim 3 or claim 4, wherein the contact angle 6 which defines the wettability of a surface by a drop of a molten metal on said ceramic-ceramic composite material, is greater than 130 degrees.

6. A process for the manufacture of a composite ceramic-ceramic material according to either claim 1 or claim 2 or claim 3 or claim 4 or claim 5, comprising the steps of impregnating a fibrous reinforcing ceramic with an aqueous alkaline alumino-silicate mixture, the composition of the principal constituents, expressed in terms of mole ratio of the oxides, being between or equal to following values :

$$M_2O/SiO_2 \quad 0.10 \text{ to } 0.95$$

$$SiO_2/Al_2O_3 \quad 2.50 \text{ to } 6.00$$

$$M_2O/Al_2O_3 \quad 0.25 \text{ to } 5.70$$

$M_2O$ representing either $Na_2O$ and/or $K_2O$, or a mixture of at least one alkaline oxide with CaO, and of hardening by polycondensation at a temperature between 20°C and 120°C.

7. Process according to claim 6, wherein auxiliary impregnation products or products to protect the fibres against chemical attack due to the high alkalinity, such as alkaline and alkaline earth sulphides and/or alkaline and alkaline earth sulphites, are added to the said reactional mixture.

## Patentansprüche

1. Keramik-Keramik Verbundstoff mit keramischer Faserverstärkung and keramischer Matrix, dadurch gekennzeichnet, dass diese keramische Matrix aus einer geopolymerischen Verbindung besteht und :

a) ein Poly(sialat) $M_n(\text{---Si-O-Al-O---})_n$ und/oder Poly(sialat-siloxo) $M_n(\text{---Si-O-Al-O-Si-O---})n$ Geopolymer enthält, wobei M ein alkalisches Kation und n den Polymerisationsgrad darstellt ;

b) ultra-feine Silikate und/oder Aluminate und/oder Silikoaluminate Verbindungen enthält, kleiner als 5 Micron, am besten kleiner als 2 Micron ;

Besagte geopolymerische Verbindung bildet sich durch Polykondensation eines wässerigen alkalischen aluminosililikaten Reaktionsgemisches bei einer Temperatur zwischen 20°C und 120°C ; wobei das Oxid-Molverhältnis des besagten Reaktionsgemisches zwischen folgenden Werten liegt oder gleich folgenden Werten ist :

$$M_2O/SiO_2 \quad 0.10 \text{ bis } 0.95$$
$$SiO_2/Al_2O_3 \quad 2.50 \text{ bis } 6.00$$
$$M_2O/Al_2O_3 \quad 0.25 \text{ bis } 5.70$$

wobei $M_2O$ entweder $Na_2O$ und/oder $K_2O$, oder eine Mischung von mindesten einer alkalischen Oxid mit CaO darstellt.

2. Verbundstoff nach Anspruch 1 der auch vorimprägnierter Verbundstoff mit keramischer Matrix genannt wird, dadurch gekennzeichnet, dass die besagte Polykondensation bei kalter Lagerung gestoppt wird.

3. Verbundstoff nach Anspruch 1 oder nach Anspruch 2, dadurch gekennzeichnet, dass besagte Faserverstärkung mindestens 30 Gew. -%, am besten mindestens 45 Gew. -%, des Verbundsstoffes ausmacht.

4. Keramik-Keramik Verbundstoff nach Anspruch 1 oder nach Anspruch 2 oder nach Anspruch 3, dadurch gekennzeichnet dass besagte Faserverstärkung aus Silikoncarbid SiC Fasern besteht.

5. Keramik-Keramik Verbundstoff nach Anspruch 1 oder nach Anspruch 2 oder nach Anspruch 3 oder nach Anspruch 4, wobei der Berührungswinkel δ — der die Befeuchtungsfähigkeit einer Oberfläche des besagten Keramik-Keramischen Verbundstoffes durch einen Tropfen geschmolzenen Metalls definiert — grösser als 120° ist.

6. Verfahren zur Herstellung eines Keramik-Keramik Verbundstoffes nach irgend einem der Ansprüche 1 bis 5, dadurch gekennzeichnet, dass eine aus keramischen Fasern gebildete Verstärkung mit einem wässerigen alkalischen aluminosililikaten Reaktionsgemisch imprägniert wird, dessen Oxid-Molverhältnis zwischen folgenden Werten liegt oder gleich folgenden Werten ist :

$$M_2O/SiO_2 \quad 0.10 \text{ bis } 0.95$$
$$SiO_2/Al_2O_3 \quad 2.50 \text{ bis } 6.00$$
$$M_2O/Al_2O_3 \quad 0.25 \text{ bis } 5.70$$

wobei $M_2O$ entweder $Na_2O$ und/oder $K_2O$, oder eine Mischung von mindesten einem alkalischen Oxid mit CaO ist und sich bei einer Temperatur zwischen 20°C und 120°C aushärten lässt.

7. Verfahren nach Anspruch 6, dadurch gekennzeichnet, dass zu diesem besagten Reaktionsgemisch Imprägnierungshilfsmittel oder gegen alkalisches Eingreifen schützende Produkte zugegeben werden, wie zum Beispiel alkalische und Erdalkalisulfide oder alkalische und Erdalkalisulfite.